# EUROPEAN PATENT APPLICATION

(11) **EP 4 617 052 A1**
(43) Date of publication of application: **17.09.2025**
(21) Application number: 25161836.9
(22) Date of filing: 05.03.2025
(51) Int. Cl.: B32B 5/02, B32B 5/06, B32B 5/10, B32B 7/12, B32B 5/12

(54) **SUCTION BELT FOR CUTTING MACHINES AND CUTTING MACHINE COMPRISING SUCH A BELT**

(30) Priority: 15.03.2024 IT 202400005806
(71) Applicant: CHIORINO S.p.A., 13900 Biella (IT)
(72) Inventor: CHIORINO, Matteo, I-13900 Biella (IT)
(74) Representative: Buzzi, Notaro & Antonielli d'Oulx S.p.A.

(57) **Abstract**

A suction belt (30) for cutting machines (10), comprising:
- a cutting layer (32) made of non-woven fabric, having a thickness between 1 - 6 mm,
- a reinforcing fabric (38),
- a hot melt adhesive layer (44) with a basis weight between 0.01 - 0.3 kg/m², positioned between the cutting layer (32) and the reinforcing fabric (38),
wherein the suction belt (30) has an air permeability in the range of 6 - 60 l/dm²/min.

## Description

### Field of the invention

The present invention relates to a suction belt for cutting machines.

According to another aspect, the present invention relates to a cutting machine having a cutting member that penetrates a suction belt, on which the pieces to be cut are held in place by suction.

### Description of the related art

Cutting machines are used in many different applications for cutting pieces from sheets of various materials, such as leather, fabric, paper, cardboard, wood, plastic materials, etc.

Cutting machines generally comprise a cutting table with two longitudinal guides, one or more transverse beams movable along the longitudinal guides, and one or more cutting heads movable along respective transverse beams. The cutting heads are equipped with a cutting member, which may be a vibrating blade, a rotating blade, a die cutter, a milling cutter, one or more chisels, etc.

The cutting table supports a suction belt with a support surface on which the pieces to be cut are placed. The suction belt is air-permeable and communicates with a suction chamber so that, during operation, a vacuum is generated on the support surface, holding the pieces to be cut in adherence to the surface. The suction belt may be movable along a closed-loop path to transport the pieces to be cut along the longitudinal direction. An example of a cutting machine equipped with a suction belt is described in WO2021260320A1.

During operation, the sheet to be cut is laid out on the suction belt and held on the support surface by suction, while the cutting head moves along a cutting path. During cutting, the cutting member must be able to fully penetrate the material to be cut and extend beyond the support surface. Therefore, during the cutting process, the cutting member penetrates the suction belt.

Suction belts for cutting machines according to the prior art are generally composed of a central reinforcing fabric positioned between two layers of non-woven fabric. The central reinforcing fabric and the two layers of non-woven fabric are bonded together through a needling process, which entangles the fibers of the non-woven fabric layers with the central reinforcing fabric.

Suction belts must have high porosity to allow the retention of the pieces to be cut by suction, good tensile strength, and the ability to withstand repeated penetration by the cutting member.

The main problem of prior art suction belts is that the central reinforcing fabric loses a significant portion of its mechanical properties both during the needling process, which bonds the fibers of the non-woven fabric layers to the central reinforcing fabric, and during cutting operations. In fact, the needling process tends to weaken the structure of the central reinforcing fabric. Additionally, the central reinforcing fabric is located near the support surface and is repeatedly penetrated by the cutting blade.

As a result, known suction belts tend to quickly lose their tensile strength and, after a certain number of operating hours, tend to develop undulations that compromise the flatness of the sheet to be cut. Furthermore, after prolonged use, the suction belt is prone to delamination. For these reasons, suction belts need to be replaced rather frequently.

In principle, one might consider addressing these issues by manufacturing suction belts using more robust and resistant reinforcing fabrics and non-woven fabric layers. However, this would inevitably reduce air permeability, making the belt unsuitable for use in cutting machines that require high belt permeability for the retention of pieces to be cut by suction.

### Object and summary of the invention

The object of the present invention is to provide a suction belt for cutting machines that overcomes the problems of the prior art.

In particular, the object of the present invention is to provide a suction belt that allows maintaining perfect planarity of the pieces to be cut and ensures high resistance to cutting even after prolonged use.

According to the present invention, these objects are achieved by a belt having the features forming the subject of claim 1.

According to another aspect, the present invention relates to a cutting machine having the features of claim 10.

Preferred embodiments of the invention form the subject of the dependent claims.

The claims constitute an integral part of the teaching provided in relation to the invention.

### Brief description of the drawings

The present invention will now be described in detail with reference to the accompanying drawings, provided purely by way of non-limiting example, in which:
- Figure 1 is a schematic view of a cutting machine,
- Figure 2 is a schematic cross section showing a suction belt according to the present invention,
- Figures 3 and 4 are schematic views showing the process for producing the suction belt of Figure 2,
- Figures 5 and 6 are schematic sections of a prior art suction belt and a suction belt according to the present invention, respectively,
- Figure 7 is a perspective view showing a blade used for cutting tests on the suction belts of Figures 5 and 6,
- Figure 8 is a schematic view showing the cutting pattern used for cutting tests on the suction belts of Figures 5 and 6,
- Figures 9 and 10 are top-view images showing the suction belts of Figures 5 and 6 after cutting tests,
- Figure 11 is a top-view image showing specimens for elongation tests obtained from the suction belts of Figures 5 and 6,
- Figure 12 schematically shows the execution of elongation tests on the specimens of Figure 11,
- Figure 13 shows a force-elongation diagram obtained during the execution of elongation tests on a specimen of Figure 11,
- Figure 14 is a top-view image showing a specimen for tear tests obtained from the suction belts of Figures 5 and 6,
- Figure 15 schematically shows the execution of tear tests on a specimen of Figure 14, and
- Figure 16 shows a force-tear length diagram obtained during the execution of tear tests on the specimens of Figure 14.

### Detailed description

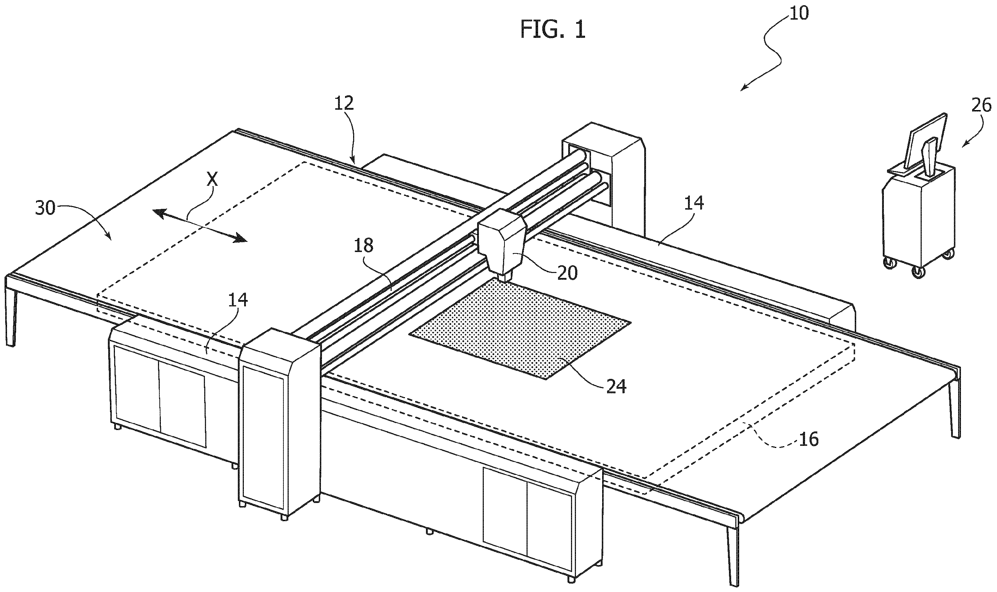

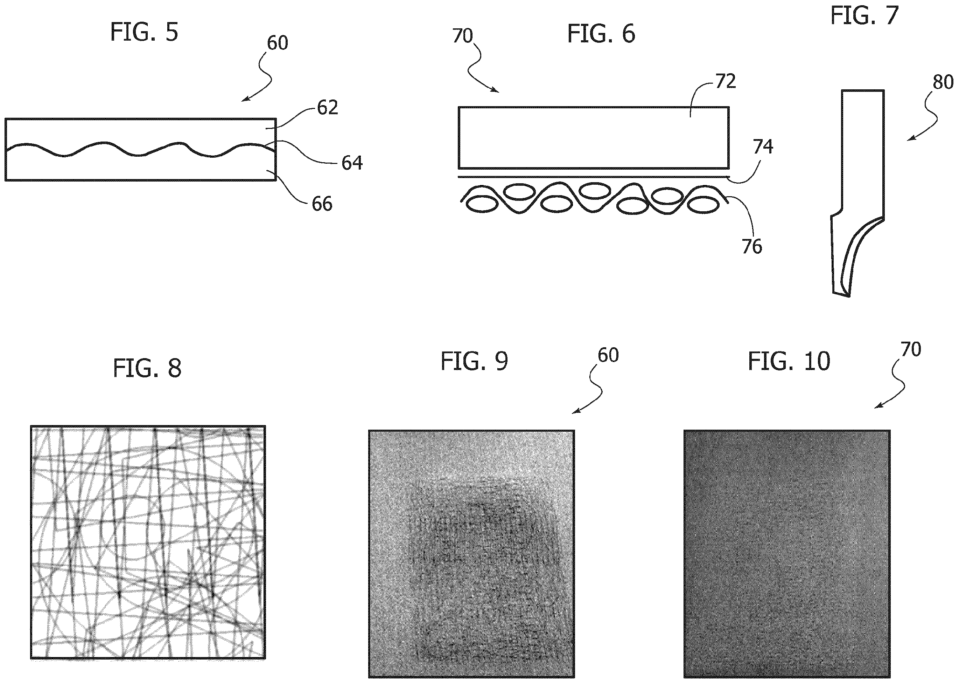

With reference to Figure 1, 10 indicates a digital cutting machine for cutting sheet material of various types.

The cutting machine 10 comprises a cutting table 12 having two longitudinal guides 14. The cutting table 12 supports a suction belt 30 having a support surface on which the pieces to be cut 24 are placed.

The cutting table 12 comprises a suction chamber 16 configured to generate a vacuum on the support surface of the suction belt 30, which retains the pieces to be cut 24 on the support surface by suction. The suction belt 30 may be closed in a loop and may be movable to transport the pieces to be cut 24 along the longitudinal direction X.

The cutting machine 10 comprises a transverse beam 18 that is movable in the X direction along the longitudinal guides 14. A cutting head 20, provided with a cutting member, is movable along the transverse beam 18.

The cutting machine 10 comprises a control unit 26 that controls the movement of the cutting head 20 along the working area in order to perform cuts with digitally selectable shapes on the pieces to be cut 24.

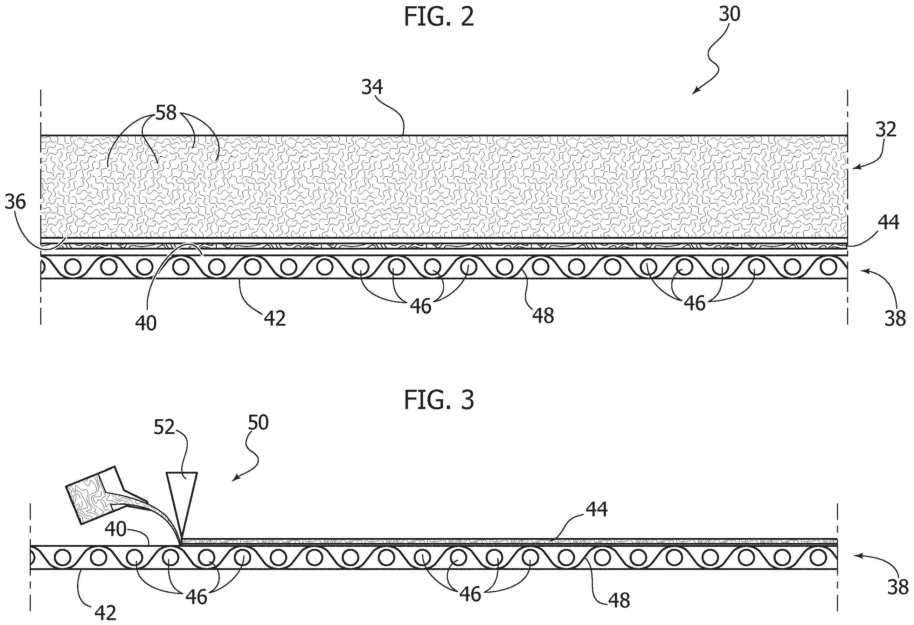

With reference to Figure 2, the suction belt 30 comprises a cutting layer 32 made of non-woven fabric and a reinforcing fabric 38, which are bonded together by a hot melt adhesive layer 44.

The cutting layer 32 has a first and a second surface 34, 36 opposite to each other. In operation, the first surface 34 supports a piece to be cut 24. The cutting layer 32 is configured to be penetrated by the cutting member, which passes through the piece to be cut 24 and penetrates the cutting layer 32 through the first surface 34.

The reinforcing fabric 38 has a third and a fourth surface 40, 42, which are opposite to each other. The second surface 36 of the cutting layer 32 is bonded to the third surface 40 of the reinforcing fabric 38 by the hot melt adhesive layer 44. The fourth surface 42 of the reinforcing fabric 38 forms the sliding side of the suction belt 30 and is intended to cooperate with the transmission and support members that move the suction belt 30 relative to the cutting table 12 of the cutting machine 10.

The cutting layer 32 has a thickness between 1 - 6 mm. During operation, the cutting member penetrates the cutting layer 32 but does not reach the reinforcing fabric 38, so the integrity of the reinforcing fabric 38 is not compromised by the repeated penetrations of the cutting blade into the cutting layer 32.

The cutting layer 32 is made of fibers 58 aggregated by needling, which may be selected from the group comprising PET, PA, PP, CO-PET, and combinations thereof.

The fibers 58 of the cutting layer 32 may be impregnated with a crosslinkable or polymerizable impregnating material at a weight concentration between 20-60%. The impregnating material may be, for example, synthetic rubber latex, TPU, or PVC.

The synthetic rubber latex may be selected from the group comprising NBR, SBR, CR, HNBR, and combinations thereof.

The reinforcing fabric 38 may have a basis weight between 0.15 - 0.85 kg/m² and a thickness between 0.2 - 1 mm.

The basis weight is measured by determining the weight per unit area, expressed in kilograms per square meter (Kg/m²). The standard method involves the following steps:
- Sampling: A standard-sized sample of material is cut (for example, 10 cm × 10 cm, i.e., 100 cm²).
- Weighing: The sample is weighed using a precision balance.
- Calculation: The measured weight is divided by the surface area to obtain the basis weight in Kg/m².

There are specific standards, such as ISO 3801 or ASTM D3776, that regulate the measurement method to ensure accurate and repeatable results.

The reinforcing fabric 38 is composed of weft threads 46 and warp threads 48 interwoven with each other.

The weft threads 46 and warp threads 48 of the reinforcing fabric 38 may be made of synthetic fibers selected from the group comprising PET, PA, cotton, and combinations thereof.

The weft threads 46 and warp threads 48 of the reinforcing fabric 38 may be multifilament threads produced by non-conventional open-end spinning.

The reinforcing fabric 38 may have a tensile strength, measured according to UNI EN ISO 5079, in the range of 30 - 50 cN/tex.

The reinforcing fabric 38 may have a plain weave structure with a 2×2 weave ratio.

The hot melt adhesive layer 44 has a basis weight between 0.01 - 0.3 kg/m² and may have a thickness between 0 and 0.15 mm.

The basis weight of an adhesive layer is measured by determining the weight of the applied adhesive per unit area, expressed in kilograms per square meter (Kg/m²). The standard method involves the following steps:
- Weighing the substrate: The support (e.g., a sheet or fabric) is weighed before the adhesive application using a precision balance.
- Applying the adhesive: The adhesive is spread evenly over the substrate using the desired method (e.g., spatula, roller, spray, etc.).
- Weighing after application: The substrate with the applied adhesive is weighed again.
- Calculation: The basis weight of the adhesive is obtained by dividing the weight difference (after and before application) by the sample surface area.

The ISO 3801 standard, which is used for determining the basis weight of a fabric, may also be used to determine the basis weight of the hot melt adhesive layer 44.

With reference to Figure 3, the hot melt adhesive layer 44 may be applied to the surface 40 of the reinforcing fabric 38 in a coating line 50.

Using a coating line makes it possible to deposit an extremely thin hot melt adhesive layer 44, in order to maintain the basis weight of the adhesive layer 44 within the limits of 0.01 - 0.3 kg/m². The coating of the hot melt adhesive layer 44 may be performed with a blade 52, which carries out an "air coating" application, meaning that there is no gap between the blade 52 and the reinforcing fabric 38.

In possible embodiments, the hot melt adhesive layer 44 may be in the form of a film or a mesh of thermo-adhesive or thermoplastic material applied to one of the surfaces to be bonded together upstream of the calender 54.

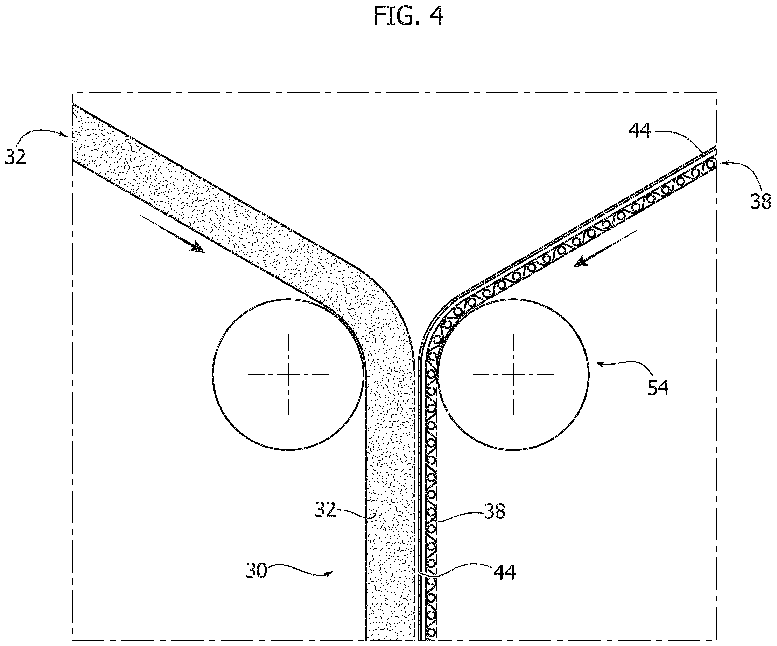

With reference to Figure 4, after applying the hot melt adhesive layer 44 to the surface 40 of the reinforcing fabric 38, or after applying a film or a mesh of thermo-adhesive or thermoplastic material, the cutting layer 32 and the reinforcing fabric 38 are bonded together in a calender 54 with heated rollers at a temperature of 90-140°C. The calender 54 allows for adjusting the lamination thickness and the tensions applied to the cutting layer 32 and the reinforcing fabric 38.

According to a characteristic of the present invention, between the first surface 34 and the fourth surface 42, the suction belt 30 has an air permeability, measured according to UNI EN ISO 9237:1995, between 6 - 60 1/dm²/min.

The reinforcing fabric 38 is formed with a standard plain weave, but with a morphology of the threads, both in warp and weft, derived from non-conventional open-end spinning, which ensures excellent air permeability of the fabric due to its ability to trap air inside, resulting from the higher bulkiness of the thread for the same areal mass.

Despite the non-conventional spinning, the fabric maintains good mechanical properties, in a range between 30 - 50 cN/tex (UNI EN ISO 5079).

Despite the use of a hot melt adhesive layer 44 to bond the reinforcing fabric 38 and the cutting layer 32, the final product maintains adequate levels of permeability for use as a suction belt for cutting machines.

The cutting layer 32, which is penetrated by the cutting blade, being impregnated with highly abrasion-resistant synthetic rubber latex, tends to self-heal, increasing the product's service life.

The most modern cutting machines 10 are increasingly wider and have cutting tables that may exceed 3 m in width. Most suction belts for cutting machines available on the market have a width of no more than 2 m. Therefore, longitudinal joints may be necessary to obtain belts with the desired width.

Longitudinal joints require the use of presses, adhesives, hot joints, and possibly reinforcing fabrics in the joint area, inevitably creating a weak point in the final product, particularly in terms of cutting resistance in the joint area, as well as increasing the product cost.

The suction belt 30 according to the present invention can be produced with a width greater than 3000 mm. In fact, the use of a reinforcing fabric 38 on the sliding side of the belt ensures excellent dimensional stability of the final belt at large widths, preventing undulations, shrinkages, and dimensional variations.

Thus, the belt according to the present invention can be used on machines with cutting tables exceeding 3 m in width without the need for longitudinal joints. This simplifies the production process and reduces costs.

Solutions according to the prior art use an intermediate reinforcing layer that is reached by the blades after a certain number of cutting cycles, leading to delamination of the product and a shorter service life.

The solution according to the present invention eliminates the need for longitudinal joints on the cutting layer of non-woven fabric in most applications and features a reinforcing fabric on the sliding side, which keeps the product flat without compromising flexibility and permeability, while increasing dimensional stability.

In the following, the results of comparative tests between a suction belt according to the present invention and a suction belt according to the closest prior art will be presented, under comparable operating conditions.

Figure 5 schematically illustrates a suction belt 60 representing the closest prior art to the present invention. The suction belt 60 illustrated in Figure 5 is a belt produced and marketed by the same applicant under the trade name SILON 25 HC.

The suction belt 60 comprises a first felt layer 62 made of PET impregnated with NBR rubber latex, a reinforcing fabric 64 made of PET, and a second felt layer 66 made of PET impregnated with NBR rubber latex. The suction belt 60 has a thickness of 2.6 - 2.8 mm and an air permeability of 11-21 1/dm²/min.

Figure 6 schematically illustrates a suction belt 70 according to the present invention. The suction belt 70 illustrated in Figure 6 is a belt developed by the same applicant, named UTRACUT 28.

The suction belt 70 comprises a felt layer 72 made of PET impregnated with NBR rubber latex, having a thickness of 2.2 - 2.4 mm, an adhesive layer 74 with a basis weight of 0.1 kg/m², and a fabric layer 76 made of PET with a thickness of 0.4 mm. The suction belt 70 has a thickness of 2.6 - 2.8 mm and an air permeability of 11-21 l/dm²/min.

The following tests were carried out on the UTRACUT 28 belt in comparison with the SILON 25 HC belt currently on the market:
1. Cutting test: evaluation of the belt's performance during material cutting with industrial machines;
2. Elastic modulus at 1% static and relaxed: determination of the belt's resistance to elastic deformation (UNI EN ISO 21181 standard);
3. Tear test: measurement of resistance to tear propagation (UNI EN ISO 4674-1 standard).

Tests 2) and 3) were performed on samples both in their original state and after cutting cycles.

In the following, the test methodologies used will be illustrated, and the results obtained will be compared.

### Cutting Test

The cutting test was performed on an industrial cutting machine using a blade 80 (Figure 7) mounted on an oscillating spindle. The movement of the blade 80 allows the cutting of materials according to desired cutting profiles. The material to be cut is held in place by suction on the cutting table, thanks to the permeability characteristics of the suction belt.

The test samples of the belts were cut over a square area with a side length of 300 mm, positioned at the center of the sample. Figure 8 illustrates the cutting pattern, composed of 1,330 cutting segments, including straight lines, curves, circles, etc., generated randomly. The cutting segments have variable lengths ranging from 14 to 135 mm. The diameters of the circles vary between 14 and 115 mm. This cutting pattern was executed twice on each sample, rotating the sample 90° around a vertical axis for the second execution.

To calibrate the test, a sheet of paper was placed on top of the sample. The blade was adjusted to establish the cutting zero, meaning the blade stroke height required to cut the paper sheet without cutting into the belt.

Starting from the cutting zero, cutting cycles were performed with two different penetration depths on different samples:
- Set 1: blade penetration of 1.2 mm
- Set 2: blade penetration of 1.4 mm

This test was performed four times (two material samples per two cutting depths).

At the end of the tests, the samples were visually inspected to evaluate the surface characteristics.

Figures 9 and 10 show images of the SILON 25 HC and UTRACUT 28 samples after the cutting tests.

The SILON 25 HC belt sample (Figure 9) shows significant wear in the area where the cutting test was performed. The surface of the belt in the cut area is much more deteriorated than the areas that were not cut. The intermediate reinforcing layer of the SILON 25 HC belt is reached by the blade after a certain number of cutting cycles, leading to delamination of the product and a reduction in service life.

The UTRACUT 28 belt sample (Figure 10) has a much more uniform appearance. The cut area does not show significant signs of deterioration compared to the areas that were not cut. The blade does not reach the reinforcing fabric, which thus remains intact even after many cutting cycles. The top felt layer tends to self-heal, significantly increasing the belt's service life.

### Test of the elastic modulus at 1% static and relaxed (UNI EN ISO 21181)

In the field of conveyor belts, the elastic modulus expresses the force in Newton per unit width of the belt required to extend a belt sample by 1% relative to its original length. This definition differs from the one normally used in engineering, where the elastic modulus measures a force per unit of cross-sectional area.

The elastic modulus of belts is determined according to the UNI EN ISO 21181 standard. The force is represented by the symbol k, and consequently, the elastic modulus is represented by the symbol k1%. This value is also called "tensile force for 1% elongation per unit width" or the k1% value, expressed in Newton per millimeter.

The relaxed elastic modulus, k1%rel, is the elastic modulus of a belt after it has been subjected to predetermined extension cycles, specifically 500 cycles. The k1% value of a new belt is higher than that of a used belt, in which relaxation has occurred during use.

For a process belt, as in the case under examination, the elastic modulus at 1% is important to allow higher tensions without deforming the belt, for example, to maintain the straightness of movement unchanged.

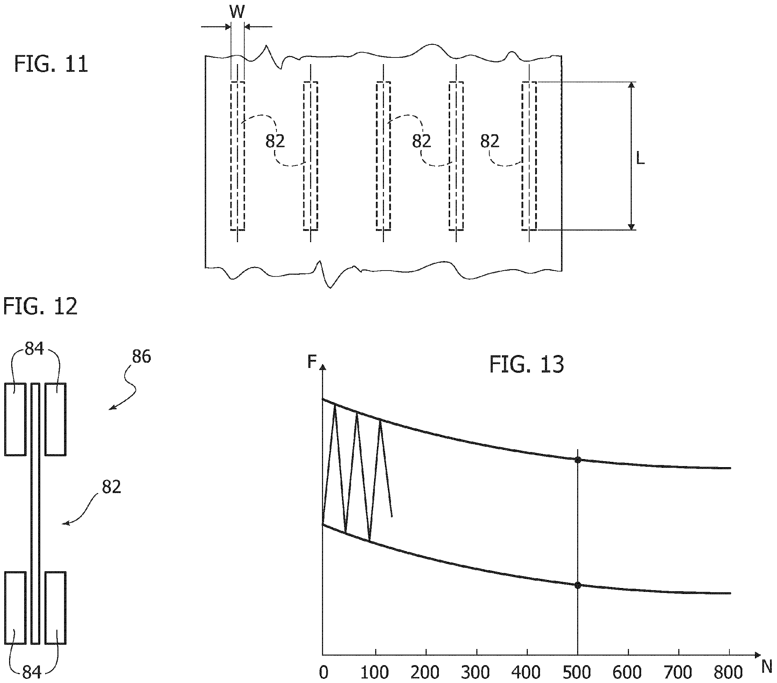

Figure 11 shows specimens 82 for the elastic modulus test. The specimens 82 are cut in the longitudinal direction from belt samples 60, 70. Each specimen has a width W of 50 mm and a length L of 500 mm.

Figure 12 schematically shows the test execution.

A specimen 82 is fixed between two clamps 84 of a dynamometer 86. For the execution of the k1% test, the dynamometer 86 applies an increasing force to the specimen 82 and measures the force value corresponding to a 1% elongation.

For the execution of the k1%rel test, the dynamometer 86 applies a force to the specimen 82 to elongate it by 1% of its length for 500 cycles.

Figure 13 illustrates the graph generated by the instrument for calculating k1%rel.

At the end of the 500 cycles, k1%rel is measured through a logarithmic regression, using a program connected to the dynamometer.

The tests were performed on samples in their original state and after cutting tests with a penetration of 1.2 mm and a penetration of 1.4 mm.

Table I reports the results obtained. The columns ΔK1% and ΔK1%rel indicate the percentage difference in the elastic modulus of the UTRACUT 28 belt samples compared to the SILON 25 HC belt samples under the same test conditions.

**Table I - Test k1% - k1%rel**

| | K1% (N/mm) | ΔK1% (%) | K1%rel (N/mm) | ΔK1%rel (%) |
|---|---|---|---|---|
| SILON 25 HC | | | | |
| as is | 2,1 | - | 0,9 | - |
| UTRACUT 28 | | | | |
| as is | 4,8 | 56,3 | 2,3 | 60,9 |
| SILON 25 HC | | | | |
| Set 1: penetration 1,2mm | 1,9 | - | 0,8 | - |
| UTRACUT 28 | | | | |
| Set 1: penetration 1,2mm | 4,5 | 57,8 | 2,1 | 61,9 |
| SILON 25 HC | | | | |
| Set 2: penetration 1,4mm | 1,5 | - | 0,6 | - |
| UTRACUT 28 | | | | |
| Set 2: penetration 1,4mm | 4,1 | 63,4 | 1,9 | 68,2 |

It can be seen that the UTRACUT 28 belt samples have k1% values 56.3% higher than the SILON 25 HC belt samples in the as-is condition. The difference increases to 57.8% and 63.4% after cutting tests with depths of 1.2 mm and 1.4 mm, respectively.

The UTRACUT 28 belt samples have k1%rel values 60.9% higher than the SILON 25 HC belt samples in the as-is condition. The difference increases to 61.9% and 68.2% after cutting tests with depths of 1.2 mm and 1.4 mm, respectively.

Thus, the UTRACUT 28 belt shows a significant increase in both static and relaxed elastic modulus compared to the SILON 25 HC belt, both in the as-is condition and after cutting cycles at different depths.

### Tear Test (UNI EN ISO 4674-1)

Tearing is one of the most common methods of destruction for many thin materials such as paper, coated or uncoated textiles, plastic films, and leather. Tearing can occur under very different circumstances, so various methods have been developed to predict material behavior in different situations. Tear resistance is of fundamental importance to ensure a longer service life of the belt after multiple cutting cycles.

The tear test was conducted according to the UNI EN ISO 4674 standard, which refers to pre-initiated tears and measures the force required to propagate a tear at a constant speed.

The method used for testing is the trouser tear test.

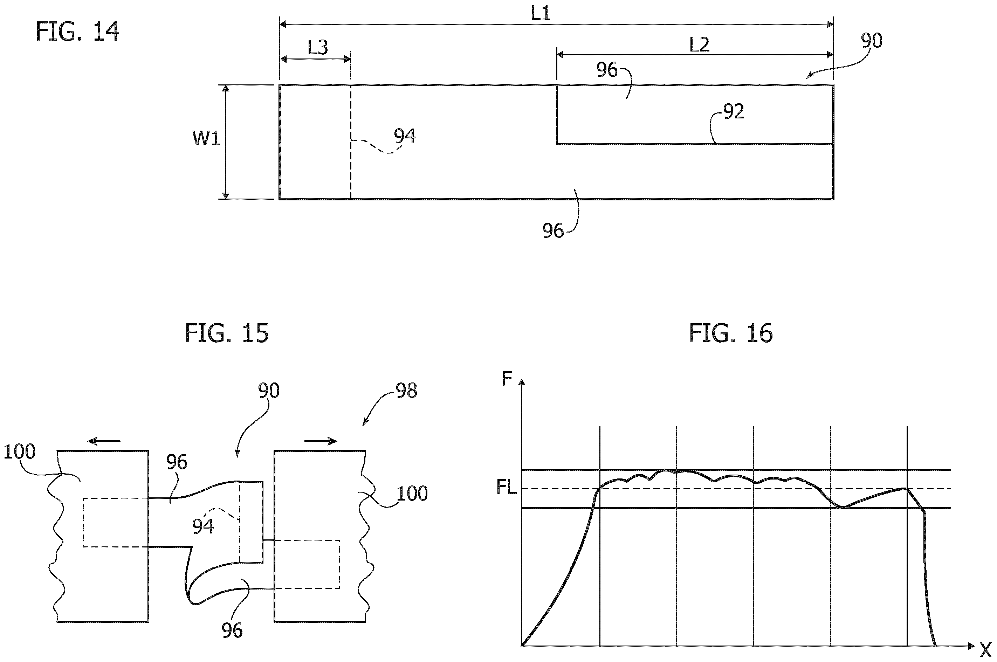

Figure 14 illustrates a specimen 90 cut from a belt sample. Each specimen has a length L1 of 200 mm and a width W1 of 50 mm. Specimens 90 are cut from the belt in both the longitudinal and transverse directions.

Each specimen 90 is pre-cut with a through-cut 92 having a length L2 of 100 mm extending along the centerline of the specimen 90, forming two legs 96.

On each specimen, a line 94 is drawn at a distance L3 of 25 mm from the uncut end of the specimen 90 to indicate the position where the tear should end upon completion of the test.

With reference to Figure 15, the test is performed using a dynamometer 98, clamping the specimen between two grips 100, with one leg 96 in each grip and with the uncut end of the specimen 90 left free.

The traction speed is 100 mm/min. During the test, it is necessary to verify that the initial tear is parallel to the direction in which the tearing force is applied and to continue the tear until the specimen has been torn up to the bottom line 94.

Figure 16 illustrates the graph showing the tearing force F as a function of the tearing length X. The test determines the tearing force F_{L} as the average value in Newtons derived from the graph in Figure 16.

The results of the tear test are reported in Table II.

**Table II - Tear test**

| | Longitudinal tear (N) | Δ Longitudinal tear (%) | Transverse tear (N) | Δ Transverse tear (%) |
|---|---|---|---|---|
| SILON 25 HC | | | | |
| as is | 226 | - | 134 | - |
| UTRACUT 28 | | | | |
| as is | 231 | 2,2 | 208 | 35,6 |
| SILON 25 HC | | | | |
| Set 1: penetration 1,2mm | 95 | - | 119 | - |
| UTRACUT 28 | | | | |
| Set 1: penetration 1,2mm | 114 | 16,7 | 129 | 7,8 |
| SILON 25 HC | | | | |
| Set 2: penetration 1,4 mm | 38 | - | 37 | - |
| UTRACUT 28 | | | | |
| Set 2: penetration 1,4 mm | 101 | 62,6 | 82,4 | 54,1 |

The column "Longitudinal tear" reports the tear force values for specimens parallel to the longitudinal direction of the belt, while the column "Transverse tear" reports the tear force values for specimens parallel to the transverse direction of the belt.

The columns "Δ Longitudinal tear" and "Δ Transverse tear" indicate the percentage difference in tear forces of the UTRACUT 28 belt samples compared to the SILON 25 HC belt samples under the same test conditions.

For the as-is specimens, the longitudinal tear force and transverse tear force of the UTRACUT 28 belt are 2.2% and 35.6% higher, respectively, compared to those of the SILON 25 HC belt.

The difference is 16.7% and 7.8%, respectively, for specimens subjected to a cutting test with a penetration of 1.2 mm, and 62.6% and 54.1% for specimens subjected to a cutting test with a penetration of 1.4 mm.

Thus, the UTRACUT 28 belt shows a significant increase in longitudinal and transverse tear force compared to the SILON 25 HC belt, both in the as-is condition and after cutting cycles at different depths.

Of course, while maintaining the principle of the invention, the construction details and embodiments may vary widely from what has been described and illustrated, without departing from the scope of the invention, as defined by the following claims.

## Claims

1. A suction belt (30) for cutting machines (10), comprising:
- a cutting layer (32) made of non-woven fabric, having a thickness between 1 - 6 mm and having a first and a second surface (34, 36) opposite to each other,
- a reinforcing fabric (38) having a third and a fourth surface (40, 42) opposite to each other,
- a hot melt adhesive layer (44) with a basis weight between 0.01 - 0.3 kg/m², which bonds the second surface (36) of said cutting layer (32) to the third surface (40) of said reinforcing fabric (38),
wherein the suction belt (30) has an air permeability between the first surface (34) and the fourth surface (42), measured according to UNI EN ISO 9237:1995, in the range of 6 - 60 1/dm²/min.

2. A suction belt (30) according to claim 1, wherein said cutting layer (32) is made of fibers (58) aggregated by needling and selected from the group comprising PET, PA, PP, CO-PET, and combinations thereof.

3. A suction belt (30) according to claim 1 or claim 2, wherein the fibers (58) of said cutting layer (32) are impregnated with a crosslinkable or polymerizable impregnating material at a weight concentration between 20-60%.

4. A suction belt (30) according to claim 3, wherein said impregnating material is a synthetic rubber latex selected from the group comprising NBR, SBR, CR, HNBR, and combinations thereof.

5. A suction belt (30) according to any of the preceding claims, wherein said reinforcing fabric (38) is made of weft threads (46) and warp threads (48) interwoven with each other and formed of fibers selected from the group comprising PET, PA, cotton, and combinations thereof.

6. A suction belt (30) according to any of the preceding claims, wherein said weft threads (46) and warp threads (48) are multifilament threads produced by non-conventional open-end spinning.

7. A suction belt (30) according to any of the preceding claims, wherein said reinforcing fabric (38) has a basis weight measured according to ISO 3801 in the range of 0.15 - 0.85 kg/m², and a thickness between 0.2 - 1 mm.

8. A suction belt (30) according to any of the preceding claims, wherein said reinforcing fabric (38) has a tensile strength measured according to UNI EN ISO 5079 in the range of 30 - 50 cN/tex.

9. A suction belt (30) according to any one of the preceding claims, wherein said hot melt adhesive layer (44) has a thickness between 0 - 0.15 mm.

10. A cutting machine (10) comprising:
- a cutting table (12) having two longitudinal guides (14) and a suction chamber (16),
- a transverse beam (18) movable along the longitudinal guides (14),
- a cutting head (20) provided with a cutting member and movable along the transverse beam (18), and
- a suction belt (30) according to any of claims 1-9, supported by said cutting table (12).
